# EUROPEAN PATENT SPECIFICATION

(11) **EP 3 205 216 B1**
(45) Date of publication and mention of the grant of the patent: **29.08.2018**
(21) Application number: 16382056.6
(22) Date of filing: 10.02.2016
(51) Int. Cl.: A23L 33/135, A23K 10/18, A23K 20/158, A23K 20/163, A23P 10/35, A23L 29/231, A23L 29/256, A23K 40/30, A23P 20/10

(54) **MULTILAYER PROBIOTIC MICROCAPSULES**
MEHRSCHICHTIGE PROBIOTISCHE MIKROKAPSELN
MICROCAPSULES PROBIOTIQUES MULTICOUCHES

(43) Date of publication of application: 16.08.2017
(73) Proprietor: Fundación Tecnalia Research & Innovation, 48160 Derio (Bizkaia) (ES)
(72) Inventor: MARAÑÓN GARCÍA, Izaskun, 01510 MIÑANO (ES); SAN VICENTE LAURENT, Leire, 01510 MIÑANO (ES); HIDALGO LEMUS, Noelia, 01510 MIÑANO (ES); CHÁVARRI HUEDA, María Blanca, 01510 MIÑANO (ES)
(74) Representative: ZBM Patents - Zea, Barlocci & Markvardsen

(56) References cited:
- WO-A1-2011/004375
- WO-A1-2013/114185
- US-A1- 2007 048 295
- US-A1- 2010 196 323
- US-A1- 2013 323 362
- ANAL ET AL: "Recent advances in microencapsulation of probiotics for industrial applications and targeted delivery", TRENDS IN FOOD SCIENCE AND TECHNOLOGY, ELSEVIER SCIENCE PUBLISHERS, GB, vol. 18, no. 5, 29 April 2007 (2007-04-29) , pages 240-251, XP022051785, ISSN: 0924-2244, DOI: 10.1016/J.TIFS.2007.01.004
- CHAVARRI M ET AL: "Microencapsulation of a probiotic and prebiotic in alginate-chitosan capsules improves survival in simulated gastro-intestinal conditions", INTERNATIONAL JOURNAL OF FOOD MICROBIOLOGY, ELSEVIER BV, NL, vol. 142, no. 1-2, 15 August 2010 (2010-08-15), pages 185-189, XP027196657, ISSN: 0168-1605 [retrieved on 2010-06-30]

## Description

The present invention relates to the field of probiotic microencapsulation. In particular the invention relates to microcapsules comprising several probiotics or symbiotics with food processing and enteric resistance.

### BACKGROUND ART

The presence of probiotic/symbiotic products on the food and nutritional supplement market have been constantly increasing for the last years.

The Joint Food and Agricultural Organization of the United Nations and World Health Organization (FAO/WHO) Expert Consultation defines probiotics as live microorganisms which, when administered in adequate amounts, confer a health benefit on the host. These microorganisms should be yeast or bacteria, predominantly bacteria as lactic-acid bacteria (LAB) with well-known beneficial effects in human health, such as intestinal function improvement or microbial balance in intestinal tract and other therapeutic effects including: immune response modulation, blood cholesterol level reduction, lactose intolerance symptom reduction, diarrhoea length reduction, blood pressure reduction and colon cancer prevention. A symbiotic product is a combination of at least a prebiotic compound and a probiotic bacteria with synergetic effect in human health. Prebiotics were first defined as non-digestible food components that beneficially affect the host by selectively stimulating the growth and/or activity of one or a limited number of bacteria in the colon, thus improving host health. This definition has been refined to include other areas that may benefit from selective targeting of particular microorganisms. Today, it is accepted that a prebiotic may be defined as a selectively fermented component that allows specific changes, both in the composition and/or activity in the gastrointestinal microflora, that confer benefits. These substances can be polysaccharides or beta-glucans, fructooligosaccharides, galactooligosaccharides, etc., which facilitate colonic microflora development.

Probiotics and prebiotics are frequently added to food or feed products to provide what is known as functional foods or feeds. Functional food or feed is a natural or processed food or feed that contains known biologically-active components which when in defined quantitative and qualitative amounts provides a clinically proven and documented health benefit. A common difficulty associated with the incorporation of probiotics in food or feed products is the loss of their viability or activity, and their decomposition and/or destruction. These problems usually emerge during the food manufacturing process and/or during the passage of these components through the digestive tract of the consumer (host). Probiotics, as most of functional substances, are sensitive to most types of conventional food processing techniques, such as high temperatures, milling, mixing, baking or extrusion. Even during the shelf life of food product, it is difficult to assure the stability or viability of these components since they could interact with other food components, such as metal chelators, surfactants, oxidants, etc. Survival of these microorganisms through the industrial process, storage and passage through the intestinal tract is essential in order to achieve their beneficial healthy effects in the host (as is stressed in definition given for the term "probiotic"). Thus, probiotic microorganisms must reach the gut alive and in sufficient numbers. More specifically, they must reach the colon alive. In the same way, the prebiotic substances must be chemically unaltered and in a suitable amount to impact beneficially in the host's health, until they reach the gut, more specifically the colon.

Microencapsulation is well-known as a suitable method to protect bacteria and other labile compounds from adverse environmental factors. The success of this technology resides in the creation of a micro-environment in which the bacteria could survive independently from the external conditions of the surrounding medium: oxygen concentration, water, heat, light or any other external substance not convenient for the compound stability or microorganism survival. Finally, the encapsulation is a suitable method to protect and enhance the retention and appropriate release of functional substances and microorganisms into the gut. The challenge is to develop a microcapsule able to enhance the survival of microorganisms and/or the stability of active substances, by correctly selecting the encapsulating materials as well as the microencapsulation process.

The literature describes a wide range of encapsulating materials and processes which can be used in the development of functional ingredients. Spray-drying, spray-chilling, fluid bed coating, melt extrusion, emulsification, coacervation, extrusion or dropping, liposome entrapment, inclusion complexation or supercritical fluid are some of the encapsulation processes commonly used to encapsulate food active agents. Regarding the encapsulating materials, several substances which can be used to entrap, coat or encapsulate solids, liquids or gases of different types, origins and properties are known; however, only a limited number thereof have been certified for food applications as "generally recognized as safe" (GRASS) materials: starch and derivatives, cellulose and derivatives, gums, alginate, carrageenan, chitosan, gelatine, whey or pea proteins, waxes, phospholipids, among others. Some relevant examples of the prior art disclosing microencapsulation of probiotics are WO2013114185, which discloses microcapsules comprising a core formed by dried bifidobacteria covered by at least two layers of lipid(s) of vegetal origin, and WO2012142153, which discloses microcapsules comprising a gelled mixture of alginate and whey protein isolate, and probiotic bacteria entrapped within the gelled mixture. Other relevant examples of prior art are:
WO2011004375 which discloses a probiotic granule comprising i) a core comprising one or a mixture of probiotic microorganisms and a substrate in which said microorganisms are absorbed; ii) an inner oily layer coating said core; and iii) a first outer layer and a second outer layer, which outer layers coat said core and said inner layer, comprising at least two different polymers, eg alginate and chitosan.

US2010196323 which discloses a probiotic health and performance promoting food, feed and/or drinking water additive containing a mixture of microorganisms, wherein it comprises at least two microorganisms selected from the group consisting of Enterococcus faecium, DSM 16211, Lactobacillus reuteri, DSM 16350, and Lactobacillus salivarius ssp, salivarius, DSM 16351, Pediococcus acidilactici, DSM 16210, and Bifidobacterium animalis, DSM 16284, wherein it additionally comprises a coating material selected from maltodextrins, guar seed flour, gum Arabic, alginates, modified starch and starch derivatives, dextrins, cellulose derivatives like cellulose ester and ether, proteins like gelatin, albumin, casein, acacia gum, tragacanth, lipids like waxes, paraffin, stearic acid, mono and diglycerides.

US2007048295 which discloses a method for preparing alginate capsules, comprising the steps of: (a) providing a matrix-forming solution comprising about 1% to about 3% of sodium alginate, up to 5% of pancreatic digested protein, and up to about 5% of at least one prebiotic, as well as probiotic bacteria or mixtures thereof; (b) making droplets of the matrix-forming solution; and (c) introducing the droplets into a calcium chloride solution to form alginate capsules; and (d) allowing the formed alginate capsules to solidify.

US2013323362 which discloses a compositions comprising probiotic bacteria, comprising: (a) a core composition containing the probiotic bacteria and a stabilizer, (b) an innermost coating layer, layered on said core composition, comprising at least one hydrophobic solid fat, fatty acid or a wax having a melting point lower than 60°C, or a combination thereof; (c) an intermediate coating layer layered on said innermost coating layer, which when present in aqueous solution in the amount of 0.1% weight/weight over the weight of the solution has surface tension lower than 60 nN/m when measured at 25°C, and (d) an outer coating layer, layered on said intermediate coating layer; wherein the composition is in the form of particles.

Anal et al (" Recent advances in microencapsulation of probiotics for industrial applications and targeted delivery", Trends in Food Science and Technology 2007, vol. 18, no. 5, pages 240-251), which discloses that encapsulation of probiotics is alginate is the most preferred route and that further coating of the capsules with high melting fat improves thermostability of the probiotics.

However, the disclosed probiotic microcapsules do not satisfactorily combine enteric resistance with appropriate processing and storage resistance.

Another problem arises with products containing several probiotic strains, or symbiotic products. It is commonly accepted that some probiotic strains have synergistic effects in terms of bioactivity and it is thus desirable to provide multi-strain probiotic products. It is however also known that the inclusion of several probiotic strains may give raise to a negative effect in the efficacy due to mutual inhibition. In this regard, toxic effects on probiotic bacteria of certain prebiotic substances at the high concentrations required in symbiotic products formulations have also been described.

Some attempts have been carried out in order to administer incompatible strains in a single product by encapsulating them separately. Chávarri M et al (International Journal of Food Microbiology (2010), vol. 142, p. 185-189) describe the encapsulation of two different strains and a prebiotic substance in separated microcapsules for each component. The encapsulation improves the viability of probiotic bacteria and avoids the prebiotic decomposition along the gastric tract. The individual encapsulation of each component of the ingredient formulation avoids the viability loss of probiotic bacteria strains during the storage time of the ingredient due to their mutual inhibition.

The problem with this approach is that it implies the individual addition of each of the encapsulated strains to the food preparation, which results in difficulties to guarantee the homogeneity of the mixture as well as the final dosage of each strain administered to the consumer when ingesting the final product.

In view of the above there is a need to overcome the above shortcomings by developing new strategies to provide food and feed products with a homogeneous probiotic and/or symbiotic composition that maintains good viability throughout industrial processing, storage and until reaching the site of action.

### SUMMARY OF THE INVENTION

The inventors have developed novel microcapsules and a method for their preparation which overcome the shortcomings mentioned above.

A first aspect of the invention thus refers to a microcapsule with a size from 10 to 3000 µm comprising
(i) a core comprising at least one probiotic, prebiotic or a mixture thereof embedded in a polymer selected from alginate and pectin,
(ii) an inner layer surrounding the core comprising at least one probiotic, prebiotic or a mixture thereof embedded in a polymer selected from alginate and pectin, and
(iii) an outer layer surrounding the inner layer comprising hydrophobic material having a melting point from 35 to 90 °C,
wherein the at least one probiotic or prebiotic comprised in the core is different from and incompatible with the at least one probiotic or prebiotic comprised in the inner layer.

The microcapsules of the invention provide several advantages. These microcapsules lodge different probiotics and/or prebiotics in the core and in the inner layer, a compartmentalization that effectively avoids negative interactions among incompatible microorganisms, or between microorganisms and certain prebiotics, within the microcapsule.

The microcapsules of the invention also have an optimal resistance profile, including an ideal combination of processing, storage and enteric resistance.

In particular, the outer layer confers enhanced resistance to mechanical and thermal stresses, which are typical of the food manufacturing processes. Said outer layer additionally provides an effective barrier to moisture. The moisture barrier is a great advantage since it prevents leakage of soluble prebiotic components, but also because it avoids an increase of water activity inside the microcapsule, which would be damaging to the entrapped probiotics.

Further, since several probiotics, prebiotics or mixtures thereof may be administered in a single microcapsule, i.e., in a single unit, ease of manufacture of the final functional food or feed product containing the desired amount of functional ingredients is guaranteed.

The microcapsules of the invention are very well suited for the manufacture of functional food or feed products. When manufacturing food or feed products containing several probiotic strains and/or prebiotics by industrial processes it is important to guarantee the homogeneity of the mixture as well as the final dosage of each strain administered to the consumer when ingesting the final product. However, this homogeneity is very difficult to achieve when different probiotic strains are added separately, which up to date has been mandatory when said strains negatively interact with each other and, in particular, for the preparation of solid products such as confectionary products, meat products or cereals. In this sense, the microcapsules of the invention containing different probiotics in a single unit are advantageous for use in the food and feed industry, since they enable a stricter control of homogeneity and dosification of the probiotics and/or prebiotics in the final product.

The microcapsules of the invention are also useful for the administration of probiotics and symbiotics in the form of nutraceuticals, such as dietary ingredients, or sanitary products, such as products designed to enhance vaginal health. Additionally, the microcapsules of the invention are useful for administering probiotics or symbiotics to plants and soils.

Thus, a second aspect of the invention is directed to use of the microcapsules as defined above for the manufacturing of a food or feed product, a food or feed ingredient, a nutraceutical, a sanitary product or an agronomical product.

A third aspect of the invention refers to a food or feed product, a food or feed ingredient, a nutraceutical, a sanitary product or an agronomical product comprising microcapsules as defined above.

Altogether, the specific design and features of the microcapsules of the invention improve ease of manufacture of the desired final product, providing at the same time an ideal microenvironment for enhanced viability of the probiotics and/or prebiotics throughout manufacture, storage and passage through the gastrointestinal track (or residence time in adverse environmental conditions) until arriving at their site of action.

Obtaining of microcapsules containing all the features and advantages as defined above is not trivial. As a result of extensive research the inventors have developed a method to prepare the microcapsules of the invention. Thus a fourth aspect of the invention refers to a process for the preparation of a microcapsule as defined above comprising:
(i) preparing a core solution comprising at least one probiotic, prebiotic or a mixture thereof in a polymer selected from alginate or pectin,
(ii) preparing an inner layer solution comprising at least one probiotic, prebiotic or mixture thereof in alginate or pectin;
(iii) prilling by vibration through concentric nozzles both solutions into a divalent ion solution,
(iv) drying the microcapsules obtained in step (iii) and
(v) applying, to the microcapsules resulting of step (iv), a coating comprising a hydrophobic material having a melting point from 35 to 90 °C,
wherein the core comprises at least one probiotic or prebiotic which is different from and incompatible with at least one probiotic or prebiotic contained in the inner layer.

### BRIEF DESCRIPTION OF THE DRAWINGS

FIG. 1: Schematic representation of the multi-layered microcapsule with (a) a regular outer layer and (b) an irregular outer layer. (c) represents microcapsules agglomerated through the outer layer. C: core, I: inner layer, O: outer layer.
FIG. 2: Schematic representation of the prilling process.
FIG. 3: Pictures showing inhibition of probiotic strains by the presence of other probiotic strains by cross streak results technique. The main (vertical) streaks are a) *L.casei*; b) *L.plantarum; c*) *L.lactis.* In each petri dish, horizontal (confronted) streaks represent: BB: B. *bifidum,* LA: *L. acidophilus,* LC: *L.casei,* LG: *L. gasseri,* LL: *L. lactis,* LP: *L. plantarum.*
FIG. 4: Picture of microcapsule H before applying the outer layer.
FIG. 5: Microparticles F size distribution (before applying outer coating). X axis represents the microparticles diameter (µm); Y axis represents % of microparticles having a particular diameter.
FIG. 6: Pictures of microcapsules D (a) and C (b).
FIG. 7: Microparticles C size distribution (before applying outer coating). X axis represents the microparticles diameter (µm); Y axis represents % of microparticles having a particular diameter.
FIG. 8: Drying effect. Comparative stability survival of *Lactobacillus plantarum* (a) and *Bifidobacterium bifidum* and *Lactobacillus gasseri* (b) after fluid bed drying or lyophilisation. A: *L. plantarum* fluid bed, B: *L. plantarum lyophilisation,* C: *B.bifidum* fluid bed, D: *L.gasseri* Fluid Bed, E: *B.bifidum* lyophiliser, F: *L.gasseri* lyophiliser. X axis represents time (in days). Y axis represents log ufc/g dry microcapsules.
FIG. 9: Picture of a microcapsule F after drying.
FIG. 10: Pictures of a microcapsule F after applying paraffin outer layer (a) or beeswax outer layer (b).
FIG. 11: % weigth increase of microcapsules F due to water absorbtion. A: non-coated microcapsules, B: paraffin-coated microcapsules, C: beeswax-coated microcapsules. X axis represents temperature (°C). Y axis represents % weight increase.
FIG. 12: % survival of the sum of *B*. *bifidum* + *L. plantarum* contained in microcapsules F after thermal treatment. A: non-coated microcapsules, B: paraffin-coated microcapsules, C: beeswax-coated microcapsules. X axis represents temperature (°C). Y axis represents % survival.
FIG. 13: A: Thermal resistance in dry conditions. % survival of the sum of *B*. *bifidum* + *L. plantarum* contained in microcapsules F after direct thermal treatment in an oven. A: non-coated microcapsules, B: (1:1) beeswax-coated microcapsules, C: (1:2) beeswax-coated microcapsules. X axis represents time (minutes). Y axis represents log ufc / g dry microcapsules.
FIG. 14: Survival of probiotic bacteria after gastrointestinal simulation. From left to right coupled bars represent survival before gastrointestinal simulation, survival after gastric simulation and survival after intestinal simulation. A: non-encapsulated *L. plantarum,* B: *L. plantarum* contained in microcapsules D. X axis represents time (minutes). Y axis represents % survival.

### DETAILED DESCRIPTION OF THE INVENTION

The present invention refers to multilayer microcapsules. The term "microcapsule" is understood as a microparticle of size from 10 to 3000 µm containing active components which is designed to release its components in the site of action. Preferably the microcapsules have size from 50 to 1000 µm, more preferably from 50 to 500 µm, still more preferably from 100 to 400 µm The microcapsules of the invention have may have different shapes and sizes, for example spheres, rods, cubes, tubes and hemispheres. Usually, the microcapsules are spherical or quasi-spherical. As used herein, the term "size" refers to a characteristic physical dimension. For example, in the most usuall case of a microcapsule that is spherical or substantially spherical, the size of the microcapsule corresponds to the diameter of the sphere or the equivalent diameter of the quasi-sphere assimilated as a sphere. The state of the art provides appropriate methods to calculate the diameter of microparticles that are substantially spherical. For example, the diameter of the microcapsules may be calculated using software such as Ellix Image Analysis Software (Microvision, France). When referring to a set of microcapsules as being of a particular size, it is contemplated that the set of microcapsules can have a distribution of sizes around the specified size. Thus, as used herein, a size of a set of microcapsules can refer to a mode of a distribution of sizes, such as a peak size of the distribution of sizes.

In particular, the active -components contained in the microcapsules of the invention are probiotics, prebiotics, mixtures of several probiotics, mixtures of several prebiotics or mixtures of probiotics and prebiotics. The probiotic active component can be bacteria or yeasts, in particular bacterial strains with well-known probiotic activity selected between species of lactobacillus and bifidobacteria genre. Non-limiting examples of probiotics are *Lactobacillus plantarum, Lactobacillus acidophilus, Lactobacillus casei, Bididobacterium bifidum, Lactobacillus gasseri, Lactobacillus helveticus.* Prebiotic active components are usually fermentable substances such as dietary fibres. Non limiting examples of prebiotics for use in the present invention are pectin, resistant starch, some polyphenols, beta-glucans, xylooligosccharides, galactooligosaccharides, oligofructose and inulin. In particular embodiments the prebiotics are short-chain polysaccharides (oligosaccharides), which have demonstrated to be particularly effective in promoting growth of probiotic bacteria.

These active components are "embedded" in polymeric material. By "embedded" it is understood that the active components are distributed within a polymeric matrix. The term "entrapped" may also be employed with the same meaning. These active components are located in separated spaces inside the microcapsule, which avoids negative interactions between incompatible active components, in particular, during prolonged shelf life. By "incompatible" components it is understood components that negatively affect the normal activity or structure of other components, thus decreasing their viability, bioavailability or functionality. For example, two probiotics may be incompatible between them because when found together one of them reduces the viability of the other, as illustrated in example 1.

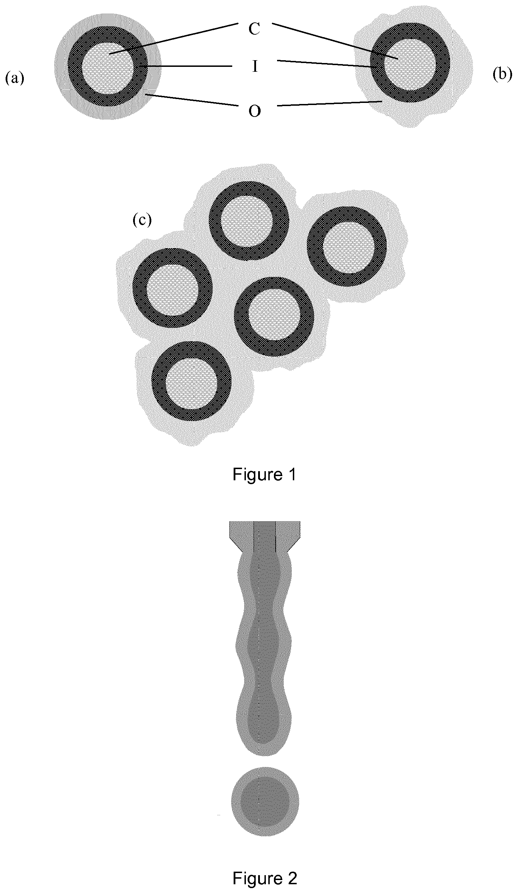

A scheme of the structure of the microcapsules of the invention is shown in figure 1. The microcapsules of the invention contain at least two polymeric matrixes, each entrapping at least one active component different from the other, organized in a core-shell structure, that is, the microcapsule comprises a core (C) comprising at least one active component embedded in a polymeric matrix and an inner layer (I) surrounding the core comprising at least one active component different from the one in the core embedded in a polymeric matrix. In certain embodiments the core comprises at least one probiotic or prebiotic which is incompatible with at least one probiotic or prebiotic comprised in the inner layer.

The invention contemplates that more than one probiotic, more than one prebiotic, or more than one prebiotic and probiotic are embedded together in the same compartment inside the microcapsule. As will be evident to the skilled person it is preferred that the probiotics and/or prebiotics contained in the same compartment are compatible, i.e. that they do not negatively affect each other's activity or normal function.

The site of action where these active components are liberated is often the colon. As such, it is necessary that the active components are to be protected from the adverse conditions present in the gastrointestinal tract. The active components must also be protected from adverse conditions frequent in food or nutraceutical processing and also during storage. Altogether the microcapsules of the invention possess enteric resistance, thermal resistance and mechanical resistance. "Enteric resistance" is understood as protection from conditions in the gastrointestinal tract that are usually damaging to probiotic microorganisms resulting in their loss of viability, such as highly acidic pH, gastric acids, bile salts, etc. In certain applications, such as in agronomy, the probiotics must be protected from adverse environmental factors, such as inadequate oxygen concentration (many probiotic bacteria are anaerobes), acidic pH, toxicity of certain compounds, etc. Thus the microcapsules of the invention additionally have environmental resistance.

However, probiotic microorganisms are sensitive to the material used for their immobilization or encapsulation. Food grade biopolymers such as alginate, gelatine, pectin, denatured whey protein, starch and derivatives, xanthan gum, carrageenan, among others are suitable materials to encapsulate alive probiotic microorganisms. The inventors have found that optimal enteric and processing resistance is achieved by selecting alginate or pectin as polymeric materials for the microcapsules. These polymers also confer resistance to adverse conditions found in the soil (low pH, toxic elements, etc.) or in the surface of a plant (excess oxygen, toxic compounds, etc.). These polymers also do not compromise viability of the probiotics. The polymer in the core may be the same or different as the polymer in the inner layer, although it is preferred that the polymer in the core is alginate. Thus a particular embodiment of the invention refers to a microcapsule wherein the core comprises at least one probiotic, prebiotic or mixtures thereof embedded in alginate. The polymer in the inner material may be alginate or pectin. Thus in another embodiment the invention refers to a microcapsule wherein the inner layer comprises at least one probiotic, prebiotic or mixtures thereof embedded in alginate. However, some alginates do not provide a sufficiently good enteric resistance. In these cases pectin may be used as the polymer for the inner layer since pectin always provides high enteric resistance. Thus in another embodiment the invention refers to a microcapsule wherein the inner layer comprises at least one probiotic, prebiotic or mixtures thereof embedded in pectin.

The microcapsules of the invention also comprise an outer layer of a hydrophobic material having melting point from 35 to 90 °C, preferably from 40 to 80 °C, more preferably from 60 to 80 °C. This outer layer not only contributes to the enteric protection of the active components, but it also confers thermal and mechanical resistance. The outer layer additionally provides a barrier to moisture. In particular embodiments the hydrophobic material in the outer layer comprises fatty acids or wax, since these materials provide the best protection. In more particular embodiments the outer material comprises waxes, such as beeswax, paraffin or carnauba wax. In a preferred embodiment the outer layer comprises beeswax. The outer layer may comprise one of the above compounds or, more often, consists in one of the above compounds.

In some embodiments, the outer layer forms a uniform (regular) coating surrounding each individual microcapsule. In other embodiments, the outer layer forms a non-uniform (irregular) coating surrounding each individual microcapsule. In other embodiments, the outer layer constitutes a microcapsule agglomerating material. The difference between these embodiments may be seen in figure 1, where drawing (a) shows a microcapsule with regular coating, drawing (b) shows a microcapsule with irregular coating and drawing (c) shows microcapsules agglomerated by the outer coating. Agglomeration provides a macrostructure with bigger size when compared to individual microcapsules, which is required for certain applications.

A particular embodiment of the invention refers to the microcapsule as defined above which has a size from 50 to 500 µm and further comprises:
(i) a core comprising at least one probiotic, prebiotic or a mixture thereof embedded in alginate,
(ii) an inner layer surrounding the core comprising at least one probiotic, prebiotic or a mixture thereof embedded in a polymer selected from alginate and pectin, and
(iii) an outer layer surrounding the inner layer comprising wax,
wherein the core comprises at least one probiotic or prebiotic which is different from and incompatible with at least one probiotic or prebiotic contained in the inner layer.

A preferred microcapsule has the features defined in the above embodiment and, additionally, the polymer in the inner layer is alginate and the wax in the outer layer is beeswax.

In some embodiments the microcapsule of the invention as defined above additionally comprises one or more further layers. In other embodiments the one or more further layers are intermediate layers located between the inner layer and the outer layer, wherein the one or more intermediate layer(s) comprises at least one probiotic, prebiotic or a mixture thereof embedded in a polymer selected from alginate and pectin that is different from at least one probiotic or prebiotic contained in the adjacent layers.

In a particular embodiment, the microcapsule comprises one intermediate layer between the inner layer and the outer layer, this intermediate layer comprising at least one probiotic, prebiotic or a mixture thereof embedded in a polymer selected from alginate and pectin that is different from at least one probiotic or prebiotic contained in the inner layer. In a particular embodiment at least one probiotic or prebiotic in the intermediate layer is not only different from, but also, incompatible with at least one probiotic or prebiotic in the inner layer. It is preferred that all layers comprising active component comprise at least one differential active component. As mentioned above, the polymer in the core of the microcapsule is preferably alginate. When the microcapsule contains an intermediate layer, said intermediate layer contains alginate or pectin, while the inner layer contains alginate. Additionally, in those cases where the microcapsule contains several intermediate layers, it is preferred that the polymer in all intermediate layers with the exception of the one which is in contact with the outer layer is alginate. The polymer in the intermediate layer which is in contact with the outer layer can be alginate or pectin, but is preferably alginate if said alginate provides good enteric resistance. Otherwise pectin may be selected.

In a particular embodiment the invention refers to a microcapsule of size from 200 to 600 µm comprising
(i) a core comprising at least one probiotic, prebiotic or a mixture thereof embedded in alginate,
(ii) an inner layer surrounding the core comprising at least one probiotic, prebiotic or a mixture thereof embedded in alginate,
(iii) an intermediate layer surrounding the inner layer comprising at least one probiotic, prebiotic or a mixture thereof embedded in a polymer selected from alginate and pectin, and
(iii) an outer layer surrounding the inner layer comprising wax,
wherein the inner layer comprises at least one probiotic or prebiotic which is different from and incompatible with at least one probiotic or prebiotic contained in the core and with at least one probiotic or prebiotic contained in the intermediate layer.

A preferred microcapsule has the features defined in the above embodiment and, additionally, the polymer in the intermediate layer is alginate and the wax in the outer layer is beeswax.

The microcapsules of the invention are very well suited for the manufacture of functional food ingredients, functional food or feed products, nutraceuticals, sanitary products and agronomic products. In one embodiment, the microcapsules of the invention to be added in the final food product contain from 10⁵ to 10¹⁰ cfu of each probiotic strain per g (dry) microcapsules and/or from 0.1 to 0.5 g prebiotic per g (dry) microcapsules. In particular embodiments the amount of each probiotic strain in the microcapsule is from 10⁷ to 10⁹ cfu of each probiotic strain per g (dry) microcapsules and/or from 0.2 to 0.4 g prebiotic per g (dry) microcapsules. Preferably, the amount of each probiotic strain in the microcapsule is from 10⁸ to 10⁹ cfu of each probiotic strain per g (dry) microcapsules and/or from 0.2 to 0.3 g prebiotic per g (dry) microcapsules. "cfu" means colony forming units.

The food or feed products containing the microcapsules of the invention may be any type of functional food or feed, such as dairy products (fermented milk, yogurt, kefir, ice-cream, cheese, etc.), meat-based products (like sausages, meat pies, etc.), soy-bean based products (like tofu, miso, yakult, etc.), infant food (formula milk, cereals, etc.), formula food for special medical purposes, nutrition bars, snack bars, breakfast cereal and cereal-based products, confectionary products, desserts, fruit juices, cereal-based juices, vegetable juices, mayonnaise, etc. The microcapsules of the invention may also be directly marketed as a food ingredient, with or without further appropriate additives or in combination with other compounds, to be used to prepare a food or feed product. The microcapsules of the invention are however also useful for the preparation of nutraceuticals, understanding the term "nutraceutical" as a product derived from a food that is marketed in the form of medicine and is demonstrated to have a physiologic benefit or to provide protection against chronic disease. Dietary supplements are a typical example for nutraceuticals. Products for vaginal health consisting of or containing probiotics, prebiotics or both, may also be considered nutraceutical, although they are also generally classified as sanitary products. Usually, nutraceuticals take the form of pills, tablets, capsules, ovules, gels, granulates. The agronomical field is also a field of administration of certain probiotics, which have been described to benefit growth of plants, inhibit plagues or benefit the overall nutritional value of the soil. Environmental applications such as reducing soil toxicity are also known. Applying particularly suited probiotics, prebiotics or mixtures thereof in the form of the microcapsules of the invention to plants and soils is also advantageous.

Also provided is a process for the preparation of a microcapsule according to the invention comprising:
(i) preparing a core solution comprising at least one probiotic, prebiotic or a mixture thereof in a polymer selected from alginate or pectin,
(ii) preparing an inner layer solution comprising at least one probiotic, prebiotic or mixture thereof in alginate or pectin;
(iii) prilling by vibration through concentric nozzles both solutions into a divalent ion solution,
(iv) drying the microcapsules obtained in step (iii) and
(v) applying, to the microcapsules resulting of step (iv), a coating comprising a hydrophobic material having a melting point from 35 to 90 °C,
wherein the core comprises at least one probiotic or prebiotic which is different from and incompatible with at least one probiotic or prebiotic contained in the inner layer.

By "prilling by vibration through concentric nozzles" it is understood simultaneously extruding the solutions through vibrating concentric nozzles (see figure 2). As will be evident to the skilled person, the core solution is extruded through the nozzle of smaller diameter, while the inner layer solution is extruded through the nozzle of larger diameter.

In a particular embodiment the microcapsule contains one intermediate layer surrounding the inner layer, and the preparation process comprises:
(i) preparing a core solution comprising at least one probiotic, prebiotic or a mixture thereof in a polymer selected from alginate or pectin,
(ii) preparing an inner layer solution comprising at least one probiotic, prebiotic or mixture thereof in alginate or pectin;
(iii) preparing an intermediate layer solution comprising at least one probiotic, prebiotic or mixture thereof in alginate or pectin
(iv) prilling by vibration through concentric nozzles the three solutions into a divalent ion solution,
(v) drying the microcapsules obtained in step (iv) and
(vi) applying, to the microcapsules resulting of step (v), a coating comprising a hydrophobic material having a melting point from 35 to 90 °C,
wherein the core comprises at least one probiotic or prebiotic which is different from and incompatible with at least one probiotic or prebiotic contained in the inner layer.

Preferably the polymer in the core solution is alginate. In particular embodiments the polymer in the core solution and in the inner solution is alginate. The polymer in the intermediate layer solution which will be in contact with the outer layer can be alginate or pectin, but is preferably alginate if said alginate provides good enteric resistance. Otherwise pectin may be selected for this layer solution.

The polymer concentration in the solutions is from 1 to 3 % (w/v) when the polymer is alginate and from 3 to 7% (w/v) when the polymer is pectin. "% w/v" is understood as per cent mass concentration, i.e. per cent mass/volume. Preferably the alginate solution comprises from 1.5 to 2% (w/v) alginate and the pectin solution comprises from 4 to 6 (w/v) pectin, since theses concentrations have been found to be the optimal for the invention because they combine an appropriate matrix for the microcapsule layers as well as appropriate viscosity for the preparation process. The amount of active component in the polymer solutions is generally from 10⁷ to 10⁹ cfu of each probiotic strain/ml solution and/or from 0.01 to 0.05 g prebiotic per/ml solution, and preferably from 10⁸ to 10⁹ cfu of each probiotic strain/ml solution and/or from 0.015 to 0.03 g prebiotic/ml solution. Thus a particular embodiment refers to a method as defined above for the preparation of microcapsules wherein the probiotic, when it is present in the core solution and/or inner layer solution and/or intermediate layer solution, is at a concentration from 10⁷ to 10¹⁰ cfu/ml solution and the prebiotic, when it is present in the core solution and/or inner layer solution and/or intermediate layer solution, is at a concentration from 0.01 to 0.05 g/ml solution.

A particular embodiment contemplates a method as defined above which comprises preparing (i) a core solution comprising from 1.5 to 2% alginate and from 10⁷ to 10⁹ cfu of at least one probiotic strain/ml solution and/or from 0.01 to 0.05 g of at least one prebiotic/ml solution, (ii) an inner layer solution comprising from 1.5 to 2% alginate and from 10⁷ to 10⁹ cfu of at least one probiotic strain/ml solution and/or from 0.01 to 0.05 g of at least one prebiotic/ml solution and, optionally, an intermediate layer comprising from 1.5 to 2% alginate and from 10⁷ to 10⁹ cfu of at least one probiotic/ml solution and/or at from 0.01 to 0.05 g of at least one prebiotic/ml solution. Another embodiment contemplates preparing a core solution and inner layer solution as above and an intermediate layer solution comprising from 4 to 6 (w/v) pectin and from 10⁷ to 10⁹ cfu of at least one probiotic strain/ml solution and/or from 0.01 to 0.05 g of at least one prebiotic/ml solution. Another embodiment contemplates preparing a core solution as above and an inner layer solution comprising from 4 to 6 (w/v) pectin and from 10⁷ to 10⁹ cfu of at least one probiotic strain/ml solution and/or from 0.01 to 0.05 g of at least one prebiotic/ml solution.

In the prilling by vibration technique, the vibrating nozzles generate a sinusoidal wave in the extruded liquid jet, particularly in the laminar flow regime, to form droplets with a considerably reduced size distribution, with one droplet formed per hertz frequency applied (figure 2). The size of the obtained microcapsules can be selected within a certain range depending on the nozzles diameter and the applied frequency. A compromise is required between the jet flow velocity and the frequency applied, because the optimal range of stable bead formation is limited by several factors: too small jet flow velocity resulting in no jet formation, but too large jet flow velocity resulting in a wavy jet; and too small frequencies resulting in satellite droplet formation, but too large vibration frequency resulting in an unstable droplet formation. In addition to the above, other parameters affect the characteristics of resulting capsules: the relative jet flow velocity (i.e. the relation between the jet velocities of the different solutions), the nozzle geometry, the relation between nozzle diameters or the difference in dynamic viscosity of the polymer solutions.

In order to obtain suitable results, the use of an outer nozzle diameter approximately double sizing the inner one is recommended. Preferably, the smaller nozzle has a diameter from 100 to 200 µm, the medium nozzle has a diameter from 200 to 400 µm and, if present, the larger nozzle has a diameter from 300 to 600 µm.

Regarding other relevant parameters, the vibration frequency is from 100 to 7000 Hz, preferably from 400 to 4000 Hz, and the relative jet flow velocity of the solutions being extruded through the nozzles is 1:1 to 1:2.5 (when extruding two solutions), more preferably from 1:1 to 1:1.5. When extruding three solutions the relative jet flow velocity of the solutions being extruded through the nozzles is from 1:1:2 to 1:2.5:5, preferably 1:1:2 to 1:1.5:3. The relative jet flow velocity is the relation between the jet velocities of the solutions being extruded through the smaller nozzle, the medium nozzle and, if present, the larger nozzle and is expressed as jet flow velocity of smaller nozzle: jet flow velocity of medium nozzle: jet flow velocity of larger nozzle (if present).

In some embodiments the prilling by vibration is combined with addition of an electrostatic force to ionize the air through which the droplets form. This may be done by means of an electrostatic device and enables optimizing droplet formation, and thus microcapsule properties. Thus, in one embodiment the method additionally comprises the step of applying an electrostatic force to the extruding microcapsules. An electrostatic force from 300 to 700 mV is useful to work with medium-high viscous solutions (the optimal conditions depend on the dynamic viscosity of the solutions). The electrostatic force achieves narrow particle size distribution and enables a reduction of the microcapsule diameter of around 20-40 %, as well as a more spherical shape of the microcapsule and a better layer distribution. In a preferred embodiment an electrostatic force from 450 to 550 mV, more preferably 500 mV, is applied.

The solutions are extruded through concentric nozzles into a divalent ion solution for hardening. The divalent ion is selected from copper, barium, strontium, calcium, zinc, cobalt and nickel. In preferred embodiments, the divalent ion is calcium. In particular embodiments, the solution is an aqueous calcium salt solution with concentration from 1 to 20% (w/v), preferably from 1 to 15%, more preferably from 1 to 10. In some embodiments the calcium salt solution has a concentration from 1 to 3%. This concentration is suitable for microcapsules containing alginate as sole polymer. In other embodiments the calcium salt solution has a concentration from 7 to 15%. This concentration is suitable for microcapsules also containing pectin. In preferred embodiments the calcium salt is calcium chloride.

The microcapsules are dried to a water activity value lower than 0.4, preferably lower than 0.3. Drying may be achieved by conventional methods, but is preferentially done at mild temperatures. Non-limiting examples of appropriate drying methods are conventional ovens, preferentially working at temperatures from 40 to 60 °C or by fluid bed drying, preferentially working at temperatures from 20 to 60 °C, and lyophilisation, preferably at temperatures below 0 °C. When lyophilisation is the selected drying method a cryoprotectant may be added. Suitable cryoprotectants for use in food products and nutraceuticals are known in the art. In a particular embodiment drying is achieved by fluid bed drying, preferentially working at temperatures from 20 to 60 °C.

When the microcapsule of the invention contains one intermediate layer, the preparation method may comprise applying the intermediate layer over a first dry capsule comprising a core and an inner layer prepared by prilling by vibration as defined above. Applying of the intermediate layer in this case may be done by conventional methods such as pan coating, atomic layer deposition or fluid bed coating. In a particular embodiment, the intermediate layer is applied by fluid bed coating. For example, the microcapsule intermediate layer could be applied in a Wurster fluid bed process where alginate solution is atomized from a bottom-spray nozzle at air inlet temperature is selected to dry the deposited layer. If further intermediate layers are desired, said layers are also preferably applied by fluid bed coating in continuous process changing feed solution.

Finally, conventional methods, preferably fluid bed coating, are also used to apply the outer layer comprising hydrophobic material of melting point from 35 to 90 °C, preferably from 40 to 80 °C. The hydrophobic material used for the coating step is selected from fatty acids and wax, preferably wax such as beeswax, paraffin or carnauba wax. In a preferred embodiment the hydrophobic material used for the coating step is beeswax. As will be evident for the skilled person, when using fluid bed coating to apply the outer layer, the method requires using melted material, i.e. melted fatty acids or melted wax.

As a result of the above process microcapsules are obtained that contain several layers, each layer lodging different probiotics and/or prebiotics and surrounded by a highly resistant outer layer. These microcapsules are ideal for applications where it is important to avoid negative interactions between different active components as well as possessing high processing and enteric or environmental resistance. Thus, the invention also refers to a microcapsule obtained by the method defined above, which possesses all the advantages and features of the microcapsule of the invention.

Microcapsule characterization may be done using several techniques. As already mentioned, microscope (Zeiss) and Ellix Image Analysis Software (Microvision Image Analysis) can be used to feature size and shape analysis. The bacteria concentration per gram of final product can be calculated by breaking the microcapsules with a solution of 0.1 M of sodium citrate. Once the microcapsules are completely broken, serial dilutions are made and poured in MRS agar plates in order to count the viable bacteria contained in the microcapsules. Moreover, microcapsules can be faced to gastric and intestinal conditions to prove their resistance and their ability to reach the colon. The same citrate solution can be used to break the microcapsules and to determine the prebiotic concentration by chromatographic techniques, for example.

Throughout the description and claims the word "comprise" and variations of the word, are not intended to exclude other technical features, additives, components, or steps. Furthermore, the word "comprise" encompasses the case of "consisting of". The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim.

### EXAMPLES

### Example 1: effect of different strains combination in their viability

An *in vitro* test is carried out to provide evidence of which probiotic strains may inhibit the growth of others using a cross-streak assay.

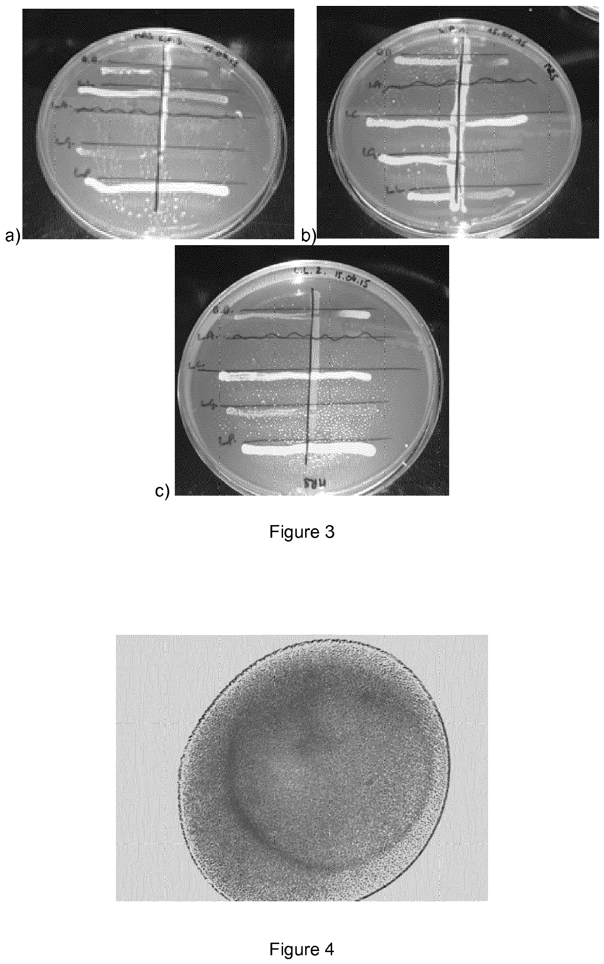

To perform the experiment, the strains selected were incubated in De Man Rogosa and Sharpe (MRS) Broth at 37°C until a concentration of 10⁸ufc/mL was reached. MRS agar plates were prepared and inoculated with the different bacteria by a single streak in the centre of the Petri dish. Then the strains were confronted to one another by streaking them perpendicularly to the main streak as can be seen in figure 3. The growth inhibitory effect of the main strain can be studied by the lack of growth in the area surrounding the center streak in the dishes.

The strains used in the experiment are reference strains obtained from the Spanish Culture Collection (Colección Española de Cultivos Tipo, CECT) and from the National Collection of Industrial, Food and Marine Bacteria (NCIMB). *Lactobacillus plantarum* CECT 220, *Lactobacillus gasseri* NCIMB 11718, *Bifidobacterium bifidum* CECT 870, *Lactobacillus acidophilus* CECT 903, *Lactobacillus lactis* NCIMB 702118 and *Lactobacillus casei* CECT 475 were tested by the cross-streak method.

An inhibitory area can be seen in figure 3 in the right zone of the Petri dish when Bifidibacterium bifidum is confronted to *Lactobacillus plantarum, Lactobacillus lactis* and *Lactobacillus casei.* These results show that B. *bifidum* is incompatible with these three lactobacillus strains, and therefore should not be administered together (i.e. in contact with each other) because the presence of the mentioned *Lactobacillus* strains negatively affects viability of the *B*. *bifidum* strain.

### Example 2: effect of a prebiotic substance concentration in the viability of a probiotic microorganism

In order to study the inhibitory effect of the prebiotic substances selected. The Minimum Inhibitory Concentration of the prebiotics selected was estimated.

*Lactobacillus plantarum* CECT 220, *Bifidobacterium bifidum* CECT 870, *Lactobacillus helveticus* CECT 402 and *Lactobacillus casei* CECT 475 were grown until the suspensions reached 10⁸ ufc/mL in MRS Broth. A stock solution of the antimicrobial substances to be tested was prepared. From the stock solution, four principle dilutions were made using MRS Broth. The final concentration of quercetin and FOS were therefore 0.25%, 0.5%, 1% and 2.5%. Each tube received 250 µL of the culture suspension. The tubes were then incubated at the right temperature under anaerobic conditions. The concentration in which there is a lack of turbidity in the tubes is considered the minimum inhibitory concentration.

Results showed that quercetin showed an inhibitory effect on the growth of the bacteria tested, as can be seen in the table below.

**Table 1. Minimum Inhibitory Concentration of quercetin**

| | % quercetin | | | |
|---|---|---|---|---|
| | 0.25 | 0.5 | 1 | 2.5 |
| *L.casei* | - | - | - | + |
| *B.bifidum* | - | - | + | + |
| *L. helveticus* | + | + | + | + |

| | | | | |
|---|---|---|---|---|
| +: inhibition observed, no turbidity | | | | |

### Example 3: encapsulation of probiotic strains or probiotic and prebiotic combinations in a single step multi-layered microcapsule by prilling technology with concentric nozzle

Table 2 shows the parameters employed for the preparation of several microcapsules containing different combinations of encapsulated active components and similar encapsulating material. The diameter is expressed as medium value with a dispersion around 10% measured after recovery from the calcium bath solution; the bacteria content for each strain on the dried microcapsules was 10⁸-10⁹UFC/g.

For the preparation of microcapsules, an appropriate amount of polymer (sodium alginate) was dissolved in deionized water at room temperature under gentle stirring in order to obtain 20 g/L solution. Active components were then incorporated into 100 mL of this solution to yield the core and inner soluctions. Probiotic amount had to be the enough to ensure at least 10⁸ UFC/mL of sodium alginate solution. For example, for the preparation of the microcapsule model A showed in Table 2 containing *L.helveticus* in 2% alginate in the core and *L.plantarum* in 2% alginate in the inner layer, 1 g *L.helveticus* pellet was added to the alginate solution to yield the core solution, and 1 g of *L.plantarum* was added for the inner layer solution in order to obtain 10⁸ and 10⁹ UFC/mL, respectively. *L.helveticus* core solution was extruded by the internal nozzle and *L.plantarum* inner layer solution by the annular one having a jet flow velocity 21 mL/min. In order to break down the jet into small droplets, a frequency of 600 Hz was applied. These droplets were harvested in Calcium chloride bath (20 g/L).

The preparation of microcapsule B in Table 2 involves the incorporation of 20g/L fructooligosaccharides (FOS) into 100 mL of 20 g/L solution of sodium alginate to form the inner layer solution. The *L.helveticus* core solution was prepared as above. These solutions were extruded through concentric nozzles adjusting the jet flow velocity 6 mL/min and the suitable microcapsules are obtained with 500 Hz. The beads are collected and harvested in a Calcium chloride bath (20 g/L).

The other model microcapsules listed in Table 2 were prepared following the above procedure. Particular conditions for each microcapsule model are shown in the table. All microcapsules were prepared without applying any electrostatic force.

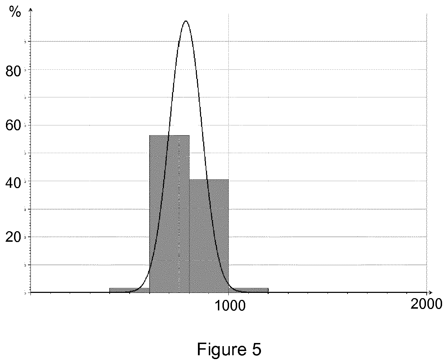

The structure of the capsule is a core-shell structure where each strain or compound is located in an individual layer of the microcapsule: one in the core and the other in the surrounding layer. 4 shows an image of a microcapsule where two probiotic combinations are entrapped in separated layers. The image was taken inmediately after recovery from the calcium bath soluction. Figure 5 shows a comparative about the capsule diameter distribution.

However, both layers are not always visible by microscopy. Layer differentiation is observed by microscopy when some relevant change exists in the layer formulation, such as different encapsulating material; core layer with probiotic and inner layer containing any prebiotic; etc. On the other hand, fluorescence is a useful tool to check the microorganism confinement in a specific layer. Fluorescence may be used for observing the different layers when the only difference consists on different probiotics being embedded in each layer. A quick gelation of encapsulating materials is a key factor to enssuret the generation of different layers, and this is an important issue to consider to optimize the preparation method for the microcapsules of the invention.

The microcapsules were characterized according to their diameter, the size distribution and the number of bacteria immobilized by gram of final product. The encapsulation conditions are dependent on the intrinsic aspect of the solutions and the ending product expected.

Table 2 includes some examples of symbiotic combinations where the prebiotic content was between 20 and 40% of dry mater content. More specifically, microcapsule B model has a 38% of prebiotic content and the microcapsule C model has 20%.

**Table 2. Preparation parameters for several microcapsules**

| Microcapsule model | core solution | Inner layer solution | Nozzle (microns) | relative jet flow velocity | Frequency (hz) | Diameter (microns) |
|---|---|---|---|---|---|---|
| A | L.helveticus/ Alginate 2% | L.plantarum/ Alginate 2% | 200/300 | 1:2 | 600 | 920 |
| B | L.helveticus/ Alginate 2% | FOS/Alginate 2% | 200/300 | 1:2 | 500 | 880 |
| C | L.plantarum/ Alginate 2% | Quercetin/ Alginate 2% | 200/300 | 1:2 | 500 | 900 |
| D | L.plantarum/ Alginate 2% | FOS/ Alginate 2% | 200/300 | 1:1 | 500 | 875 |
| E | B.bifidum/ Alginate 2% | L.plantarum/ Alginate 2% | 100/200 | 1:2.5 | 2900 | 940 |
| F | B.bifidum/ Alginate 2% | L.plantarum/ Alginate 2% | 200/300 | 1:1.5 | 2900 | 1120 |
| G | B.bifidum/ Alginate 1.5% | L.plantarum/ Alginate 1.5% | 200/300 | 1:1.5 | 4000 | 1230 |
| H | B.bifidum/ Alginate 1.5% | L.gasseri/ Alginate 1.5% | 200/300 | 1:2 | 3700 | 1155 |

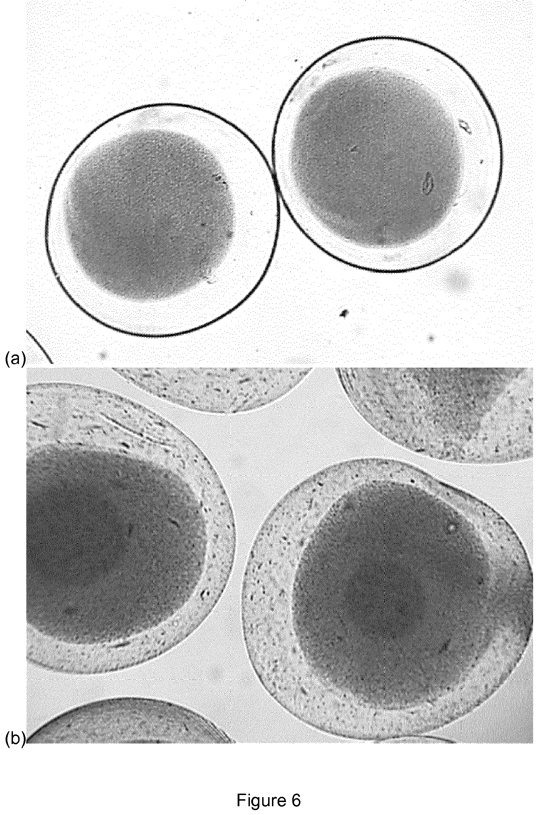

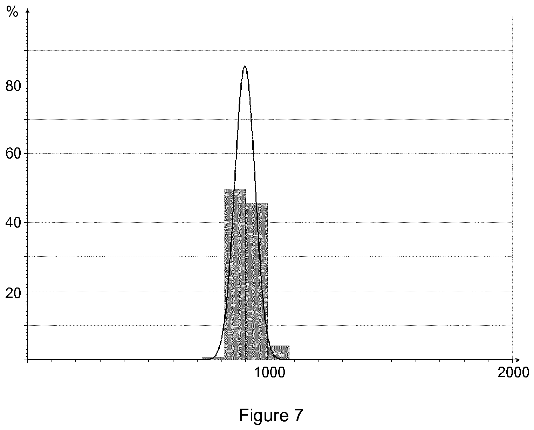

Figure 6 shows a picture of the microcapsule D which contains probiotic *L.plantarum* embedded in the core layer and prebiotic FOS embedded in the inner layer. Figure 7 shows a typical size distribution of the microcapsules recovered from the calcium bath solution.

### Example 4: drying process

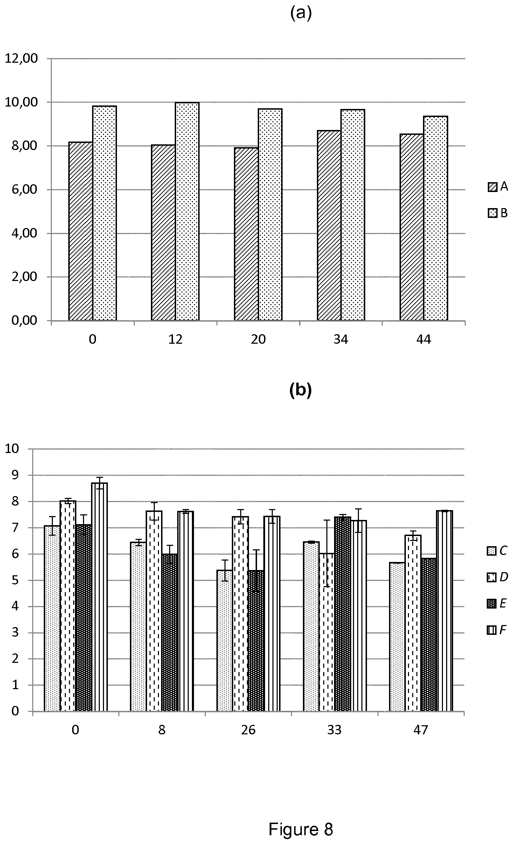

The microcapsules were dryed by two different methods, namely fluid bed drying at 40°C air inlet and room temperature air outlet and lyophylization with conditions: freeze at -40°C for 3 hours, 44 hours drying process at differents temperatures -20°C, 0°C, 12°C and 4°C. Figure 8 shows the viability of the encapsulated bacteria after drying microcapules by the two different methods (Figure 8a relates to model D microcapsules (see Table 2) containing *L.plantarum* while Figure 8b refers to model H microcapsules (see Table 2) conatining B. *bifidum* and *L. gasseri*). It may be observed that viability after drying and during storage does not greatly differ with the selected drying method. Consequently, it was concluded that fluid bed drying, which is a highly economical and convenient method for the food industry, may be as convenient for the process of the invention as lyophylization.

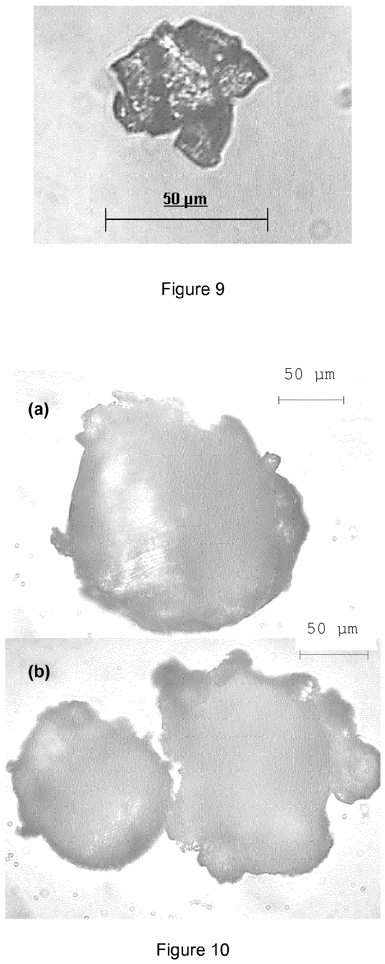

Figure 9 shows a (microscopy) picture of microcapsule F after drying

### Example 5: wax coating process

The dryed microcapsules obtained in example 4 were coated with a wax layer by fluid bed coating using a UNI-Glatt fluid bed equipment (Glatt Ingenieurtechnik GmbH, Germany) configured in the top-spray option. By using this method, the hardened microcapsules could be dried and coated in successive steps in the same batch.

As an example, dried microcapsules F were covered with a) melted beeswax or b) parrafin. Melted beeswax was sprayed at 75° C and the fluidizing air is introduced at 20° C to control the air outlet temperature at 30° C. Coating material was sprayed in order to obtain a 1:1 or 1:2 ratio (w/w) of microcapsules:coating. Melted paraffin was sprayed at 45° C, at same inlet air temperature in order to obtaina a 1:1 or 1:2 ratio (w/w) of microcapsules:coating.

Figure 10 shows 1:1 ratio (w/w) paraffin-coated (Figure 10A) and beeswax-coated (Figure 10B) microcapsules F.

### Example 6: moisture barrier and thermal stability in solution.

The 1:1 ratio (w/w) beeswax-coated and paraffin-coated microcapsules F obtained in example 5 and equivalent non-coated microcapsules were confronted to a temperature range between 50 and 80°C. Temperatures were been chosen according to commonly used food processing parameters.

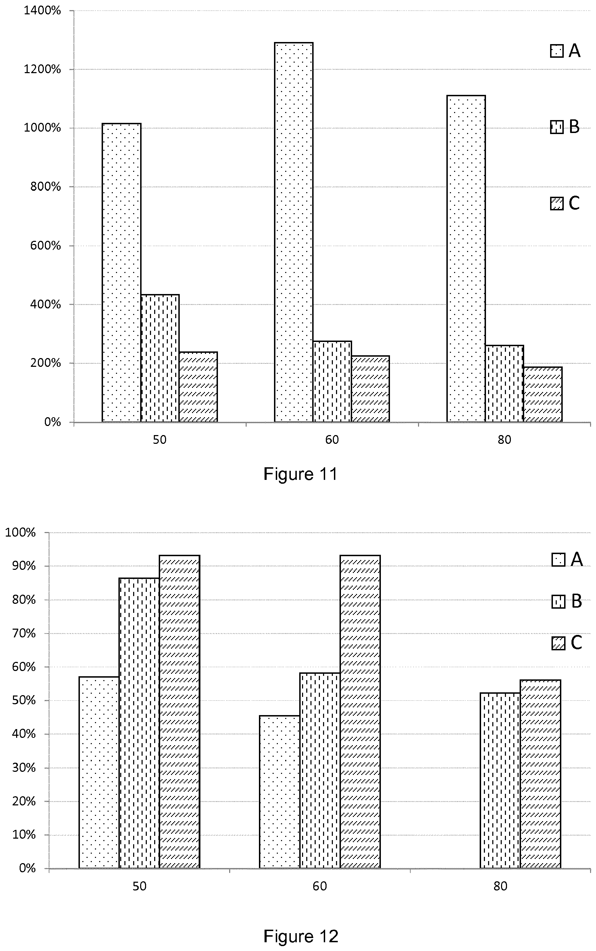

The microcapsules were suspended in 10 mL of water and submerged in a water bath at 50, 60 and 80°C during 15 minutes. The water absorption was measured by weighing filtered microcapsules in reference with the dry weight added to each tube. Superficial water was also considered. Figure 11 shows the results in terms of % weigth increase due to water absorbtion. It may be observed that beeswax and paraffin-coated microcapsules possess an effective moisture barrier (i.e. are more impermeable to water absorbtion) when compared to non-coated microcapsules. The reduction of water absorption is interesting to preserve the microencapsulated bacteria in a low water activity environment and achieve longer shelf life of the probiotic.

The viability of probiotic bacteria (*B. bifidum* + *L. plantarum*) contained in the same microcapsules under the above conditions was also studied in solution. For this, all microcapsules were recovered by filtration and broken in the presence of 10 mL of 0.1 M citric acid solution. Non-coated microcapsules were directly broken by vortexing. Coated microcapsules were mechanically broken in a mortar. Bacteria were directly cultured in MRS agar plates. The amount of surviving bacteria was compared with bacterial amount before thermal treatment (% survival). Results expressed as % survival of the sum of *B. bifidum* + *L. plantarum* are shown in Figure 12. It may be observed that survival after thermal treatment is greatly increased in coated microcapsules, to the point that bacterial viability is completely lost after treatment at 80 °C in non-coated microcapsules, while survival remains around 50% for bacteria in coated microparticles.

### Example 7: thermal stability improvement

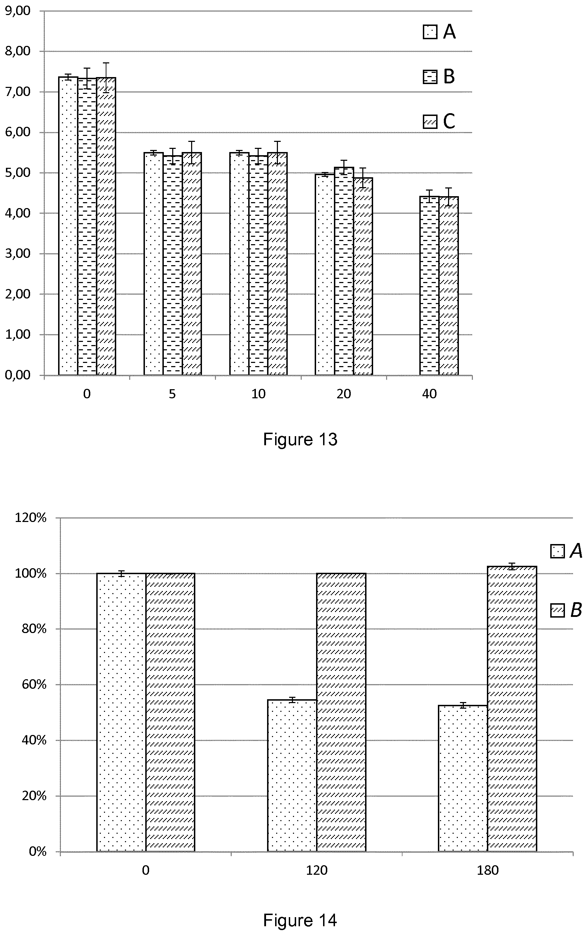

Bacterial survival in the above experiment could be related with both, the reduction of water absorption and with thermal resistance improvement. In order to study the influence of thermal resistance of the microcapsules over bacterial viability as an isolated factor, a new experiment was carried out in dry conditions. Control (non-coated) microcapsules F and 1:1 and 1:2 ratio (w/w) beeswax-coated microcapsules F as obtained in example 5 were subjected to 80 °C for 40 min in an oven. Microcapsules were then broken and % survival of the probiotics was determined as explained above. Results are shown in Figure 13. A significant improvement of bacteria survival due to the beeswax coating was observed after 40 min heat treatment.

### Example 8: gastric resistance of the encapsulated probiotic microorganism

To ensure optimum activity of the probiotic and symbiotic active components, the bacteria have to be alive until they reach the colon. The survival of microcapusules D (before coating) and a similar amount of *L.plantarum* free bacteria was determined before and after gastric and intestinal simulation. A protocol was followed that has been previously described (Chávarri *et al, supra*). Results expressed in % survival are shown in Figure 14. It may be observed that bacteria microencapsulated according to the invention have significantly increased survival when compared with the same bacteria without microencapsulation.

### REFERENCES CITED IN THE APPLICATION

WO2013114185
WO2012142153
Chávarri M et al, "Microencapsulation of a probiotic and prebiotic in alginate-chitosan capsules improves survival in simulated gastro-intestinal conditions". International Journal of Food Microbiology (2010), vol. 142, p. 185-189.
WO2011004375
US2010196323
US2007048295
US2013323362
Anal et al (" Recent advances in microencapsulation of probiotics for industrial applications and targeted delivery", Trends in Food Science and Technology 2007, vol. 18, no. 5, pages 240-251).

## Claims

1. A microcapsule with a size from 10 to 3000 µm comprising
(i) a core comprising at least one probiotic, prebiotic or a mixture thereof embedded in a polymer selected from alginate and pectin,
(ii) an inner layer surrounding the core comprising at least one probiotic, prebiotic or a mixture thereof embedded in a polymer selected from alginate and pectin, and
(iii) an outer layer surrounding the inner layer comprising hydrophobic material having a melting point from 35 to 90 °C,
wherein the at least one probiotic or prebiotic comprised in the core is different from and incompatible with the at least one probiotic or prebiotic comprised in the inner layer.

2. The microcapsule according to claim 1, that comprises one or more intermediate layers between the inner layer and the outer layer, wherein the one or more intermediate layer(s) comprises at least one probiotic, prebiotic or a mixture thereof embedded in a polymer selected from alginate and pectin that is different from at least one probiotic or prebiotic contained in the adjacent layers.

3. The microcapsule according to any of the claims 1-2, wherein the core comprises at least one probiotic, prebiotic or a mixture thereof embedded in alginate.

4. The microcapsule according to any of the claims 1-3, wherein the inner layer comprises at least one probiotic, prebiotic or a mixture thereof embedded in alginate.

5. The microcapsule according to any of the claims 1-3, wherein the inner layer comprises at least one probiotic, prebiotic or a mixture thereof embedded in pectin.

6. The microcapsule according to any of the claims 1-5, wherein the hydrophobic material in the outer layer comprises fatty acids or wax.

7. The microcapsule according to claim 1 which has a size from 50 to 500 µm and further comprises:
(i) a core comprising at least one probiotic, prebiotic or a mixture thereof embedded in alginate,
(ii) an inner layer surrounding the core comprising at least one probiotic, prebiotic or a mixture thereof embedded in a polymer selected from alginate and pectin, and
(iii) an outer layer surrounding the inner layer comprising wax,
wherein the core comprises at least one probiotic or prebiotic which is different from and incompatible with at least one probiotic or prebiotic contained in the inner layer.

8. Use of the microcapsule as defined in any of the claims 1-7 for the manufacturing of a food or feed product, a food or feed ingredient, a nutraceutical, a sanitary product or an agronomical product.

9. A food or feed product, a food or feed ingredient, a nutraceutical, a sanitary product or an agronomical product comprising microcapsules as defined in any of the claims 1-7.

10. A process for the preparation of a microcapsule as defined in any of the claims 1-7 comprising:
(i) preparing a core solution comprising at least one probiotic, prebiotic or a mixture thereof in a polymer selected from alginate or pectin,
(ii) preparing an inner layer solution comprising at least one probiotic, prebiotic or mixture thereof in alginate or pectin;
(iii) optionally preparing an intermediate layer solution comprising at least one probiotic, prebiotic or mixture thereof in alginate or pectin;
(iv) prilling by vibration through concentric nozzles the solutions prepared in (i) and (ii), and optionally (iii), into a divalent ion solution,
(v) drying the microcapsules obtained in step (iv) and
(vi) applying, to the microcapsules resulting of step (v), a coating comprising a hydrophobic material having a melting point from 35 to 90 °C,
wherein the core comprises at least one probiotic or prebiotic which is different from and incompatible with at least one probiotic or prebiotic contained in the inner layer.

11. The process according to claim 10, wherein the polymer concentration in the solutions (i) and (ii) is from 1 to 3 % (w/v) when the polymer is alginate and from 3 to 7% (w/v) when the polymer is pectin.

12. The process according to any of the claims 10-11, wherein the probiotic, when it is present in the core and/or inner layer and/or intermediate layer solutions, is at a concentration from 10⁷ to 10⁹ cfu/mL solution and the prebiotic, when it is present in the core and/or inner layer and/or intermediate layer solutions, is at a concentration from 0.01 to 0.05 g/mL solution.

13. The process according to any of the claims 10-12, wherein the hydrophobic material comprised in the coating of step (vi) is selected from fatty acids and wax.

14. The process according to any of the claims 10-13, that additionally comprises the step of applying an electrostatic force to the extruding microcapsules.

## Patentansprüche

1. Eine Mikrokapsel mit einer Größe von 10 bis 3000 µm umfassend
(i) einen Kern umfassend mindestens ein Probiotikum, ein Präbiotikum, oder eine Mischung davon, das, oder die, in einem Polymer ausgewählt aus Alginat und Pectin eingebettet ist,
(ii) eine innere Schicht, die den Kern umschließt, umfassend mindestens ein Probiotikum, ein Präbiotikum, oder eine Mischung davon, das oder die in einem Polymer ausgewählt aus Alginat und Pectin eingebettet ist, und
(iii) eine äußere Schicht, die die innere Schicht umschließt, umfassend hydrophobes Material mit einer Schmelztemperatur von 35 bis 90 °C,
wobei das mindestens eine Probiotikum oder Präbiotikum, das im Kern enthalten ist, verschieden von und unverträglich mit dem mindestens einen in der innen Schicht enthaltenen Probiotikum oder Präbiotikum ist.

2. Die Mikrokapsel nach Anspruch 1, welche eine oder mehrere mittlere Schichten zwischen der inneren Schicht und der äußeren Schicht umfasst, wobei die eine oder die mehreren mittlere(n) Schicht(en) mindestens ein Probiotikum, ein Präbiotikum, oder einer Mischung davon, umfasst oder umfassen, das, oder die, in einem Polymer ausgewählt aus Alginat und Pectin eingebettet ist, das oder die verschieden von mindestens einem in den angrenzenden Schichten enthaltenen Probiotikum oder Präbiotikum ist.

3. Die Mikrokapsel nach einem der Ansprüche 1-2, wobei der Kern mindestens ein Probiotikum, ein Präbiotikum oder eine Mischung davon umfasst, das oder die in Alginat eingebettet ist.

4. Die Mikrokapsel nach einem der Ansprüche 1-3, wobei die innere Schicht mindestens ein Probiotikum, ein Präbiotikum oder eine Mischung davon umfasst, das oder die in Alginat eingebettet ist.

5. Die Mikrokapsel nach einem der Ansprüche 1-3, wobei die innere Schicht mindestens ein Probiotikum, ein Präbiotikum oder eine Mischung davon umfasst, das oder die in Pectin eingebettet ist.

6. Die Mikrokapsel nach einem der Ansprüche 1-5, wobei das hydrophobe Material in der äußeren Schicht Fettsäuren oder Wachs umfasst.

7. Die Mikrokapsel nach Anspruch 1, welche eine Größe von 50 bis 500 µm hat und weiterhin folgendes umfasst:
(i) einen Kern umfassend mindestens ein Probiotikum, ein Präbiotikum oder eine Mischung davon, das oder die in Alginat eingebettet ist,
(ii) eine innere Schicht, die den Kern umschließt, umfassend mindestens ein Probiotikum, ein Präbiotikum oder eine Mischung davon, das oder die in einem Polymer ausgewählt aus Alginat und Pectin eingebettet ist, und
(iii) eine äußere Schicht, die die innere Schicht umschließt, umfassend Wachs,
wobei der Kern mindestens ein Probiotikum oder ein Präbiotikum umfasst, das verschieden von und unverträglich mit mindestens einem in der inneren Schicht enthaltenen Probiotikum oder Präbiotikum ist.

8. Verwendung der Mikrokapsel wie in einem der Ansprüche 1-7 definiert zur Herstellung von einem Nahrungs- oder Futtermittel, einer Nahrungs- oder Futteringredienz, einem Nutraceutical, einem Hygieneprodukt oder einem landwirtschaftlichen Produkt.

9. Ein Nahrungs- oder Futterprodukt, eine Nahrungs- oder Futteringredienz, ein Nutraceutical, ein Hygieneprodukt oder ein landwirtschaftliches Produkt enthaltend Mikrokapsel wie in einem der Ansprüche 1-7 definiert.

10. Ein Verfahren zur Herstellung von einer Mikrokapsel wie in einem der Ansprüche 1-7 definiert umfassend:
(i) zubereiten von einer Kernlösung umfassend mindestens ein Probiotikum, ein Präbiotikum, oder eine Mischung davon, in einem Polymer ausgewählt aus Alginat oder Pectin,
(ii) zubereiten von einer Innenschichtlösung umfassend mindestens ein Probiotikum, ein Präbiotikum, oder eine Mischung davon, in Alginat oder Pectin;
(iii) wahlweise zubereiten von einer Mittelschichtlösung umfassend mindestens ein Probiotikum, ein Präbiotikum, oder eine Mischung davon, in Alginat oder Pectin;
(iv) prillen mittels Vibration der in (i) und (ii) und wahlweise (iii) zubereiteten Lösungen durch konzentrische Düsen, in eine Lösung von divalenten Ionen,
(v) trocknen der in Schritt (iv) erhaltenen Mikrokapseln und
(vi) auftragen, auf die aus dem Schritt (v) resultierenden Mikrokapseln, von einer Beschichtung umfassend ein hydrophobes Material mit einer Schmelztemperatur von 35 bis 90 °C,
wobei der Kern mindestens ein Probiotikum oder ein Präbiotikum umfasst, das verschieden von und unverträglich mit mindestens einem in der inneren Schicht enthaltenen Probiotikum oder Präbiotikum ist.

11. Das Verfahren nach Anspruch 10, wobei die Polymerkonzentration in den Lösungen (i) und (ii) von 1 bis 3% (w/v) reicht, wenn das Polymer Alginat ist und von 3 bis 7% (w/v) reicht, wenn das Polymer Pectin ist.

12. Das Verfahren nach einem der Ansprüche 10-11, wobei das Probiotikum, wenn es in der Kern- und/oder in der Innenschicht- und/oder in der Mittelschichtlösung anwesend ist, in einer Konzentration von 10⁷ bis 10⁹ KbE/mL-Lösung vorhanden ist und das Präbiotikum, wenn es in der Kern- und/oder in der Innenschicht- und/oder in der Mittelschichtlösung anwesend ist, in einer Konzentration von 0,01 bis 0,05 g/mL-Lösung vorhanden ist.

13. Das Verfahren nach einem der Ansprüche 10-12, wobei das in der Beschichtung des Schritts (vi) enthaltene hydrophobe Material ausgewählt aus Fettsäuren und Wachs ist.

14. Das Verfahren nach einem der Ansprüche 10-13, welches zusätzlich den Schritt umfasst, in dem eine elektrostatische Kraft auf die extrudierenden Mikropartikeln ausgeübt wird.

## Revendications

1. Une microcapsule ayant une taille de 10 à 3000 µm comprenant
(i) un noyau comprenant au moins un probiotique, un prébiotique, ou un mélange de ceux-ci, incorporé dans un polymère choisi parmi l'alginate et la pectine,
(ii) une couche intérieure entourant le noyau comprenant au moins un probiotique, un prébiotique, ou un mélange de ceux-ci, incorporé dans un polymère choisi parmi l'alginate et la pectine, et
(iii) une couche extérieure entourant la couche intérieure comprenant un matériau hydrophobe ayant un point de fusion de 35 à 90 °C,
dans laquelle l'au moins un probiotique ou prébiotique compris dans le noyau est différent de et incompatible avec l'au moins un probiotique ou prébiotique compris dans la couche intérieure.

2. La microcapsule selon la revendication 1, qui comprend une ou plusieurs couches moyennes entre la couche intérieure et la couche extérieure, dans laquelle l'une ou les plusieurs couche(s) moyenne(s) comprend ou comprennent au moins un probiotique, un prébiotique, ou un mélange de ceux-ci, incorporé dans un polymère choisi parmi l'alginate et la pectine qui est différent d'au moins un probiotique ou prébiotique contenu dans les couches adjacentes.

3. La microcapsule selon l'une quelconque des revendications 1-2, dans laquelle le noyau comprend au moins un probiotique, un prébiotique, ou un mélange de ceux-ci, incorporé dans de l'alginate.

4. La microcapsule selon l'une quelconque des revendications 1-3, dans laquelle la couche intérieure comprend au moins un probiotique, un prébiotique, ou un mélange de ceux-ci, incorporé dans de l'alginate.

5. La microcapsule selon l'une quelconque des revendications 1-3, dans laquelle la couche intérieure comprend au moins un probiotique, un prébiotique, ou un mélange de ceux-ci, incorporé dans de la pectine.

6. La microcapsule selon l'une quelconque des revendications 1-5, dans laquelle le matériau hydrophobe dans la couche extérieure comprend des acides gras ou de la cire.

7. La microcapsule selon la revendication 1 qui a une taille de 50 à 500 µm et qui comprend en outre :
(i) un noyau comprenant au moins un probiotique, un prébiotique, ou un mélange de ceux-ci, incorporé dans de l'alginate,
(ii) une couche intérieure entourant le noyau comprenant au moins un probiotique, un prébiotique, ou un mélange de ceux-ci, incorporé dans un polymère choisi parmi l'alginate et la pectine, et
(iii) une couche extérieure entourant la couche intérieure comprenant de la cire,
dans laquelle le noyau comprend au moins un probiotique ou un prébiotique qui est différent de et incompatible avec l'au moins un probiotique ou prébiotique contenu dans la couche intérieure.

8. Utilisation de la microcapsule telle que définie dans l'une quelconque des revendications 1-7 pour la fabrication d'un produit alimentaire ou de nourriture, un ingrédient alimentaire ou de nourriture, un alicament, un produit sanitaire ou agronomique.

9. Un produit alimentaire ou de nourriture, un ingrédient alimentaire ou de nourriture, un alicament, un produit sanitaire ou un produit agronomique comprenant des microcapsules telles que définies dans l'une quelconque des revendications 1-7.

10. Un procédé pour la préparation d'une microcapsule telle que définie dans l'une quelconque des revendications 1-7 comprenant :
(i) préparer une solution de noyau comprenant au moins un probiotique, un prébiotique, ou un mélange de ceux-ci, dans un polymère choisi parmi l'alginate ou la pectine,
(ii) préparer une solution de couche intérieure comprenant au moins un probiotique, un prébiotique, ou un mélange de ceux-ci, dans de l'alginate ou de la pectine ;
(iii) préparer facultativement une solution de couche moyenne comprenant au moins un probiotique, un prébiotique, ou un mélange de ceux-ci, dans de l'alginate ou de la pectine ;
(iv) priller par vibration à travers de buses concentriques les solutions préparées en (i) et (ii), et facultativement (iii), obtenant une solution d'ions divalents,
(v) sécher les microcapsules obtenues dans l'étape (iv) et
(vi) appliquer, aux microcapsules résultantes de l'étape (v), un revêtement comprenant un matériau hydrophobe ayant un point de fusion de 35 à 90 °C,
dans laquelle le noyau comprend au moins un probiotique ou un prébiotique qui est différent de et incompatible avec l'au moins un probiotique ou prébiotique contenu dans la couche intérieure.

11. Le procédé selon la revendication 10, dans lequel la concentration de polymère dans les solutions (i) et (ii) est de 1 à 3 % (p/v) lorsque le polymère est l'alginate et de 3 à 7 % (p/v) lorsque le polymère est la pectine.

12. Le procédé de l'une quelconque des revendications 10-11, dans lequel le probiotique, lorsqu'il est présent dans la solution de noyau et/ou de couche intérieure et/ou de couche moyenne, est à une concentration de 10⁷ à 10⁹ UFC/mL de solution et le prébiotique, lorsqu'il est présent dans la solution de noyau et/ou de couche intérieure et/ou de couche moyenne, est à une concentration de 0,01 à 0,05 g/mL de solution.

13. Le procédé selon l'une quelconque des revendications 10-12, dans lequel le matériau hydrophobe compris dans le revêtement de l'étape (vi) est choisi parmi des acides gras et de la cire.

14. Le procédé selon l'une quelconque des revendications 10-13, qui comprend en outre l'étape d'appliquer une force électrostatique aux microcapsules étant extrudées.
